# EUROPÄISCHE PATENTSCHRIFT

(11) **EP 1 572 496 B1**
(45) Veröffentlichungstag und Bekanntmachung des Hinweises auf die Patenterteilung: **19.04.2006**
(21) Anmeldenummer: 03782336.6
(22) Anmeldetag: 09.12.2003
(51) Int. Cl.: B60Q 1/00

(54) **MULTIFUNKTIONALE BELEUCHTUNGSEINRICHTUNG**
MULTIFUNCTIONAL ILLUMINATION DEVICE
DISPOSITIF D'ECLAIRAGE MULTIFONCTIONNEL

(30) Priorität: 18.12.2002 DE 10259185
(43) Veröffentlichungstag der Anmeldung: 14.09.2005
(73) Patentinhaber: DaimlerChrysler AG, 70567 Stuttgart (DE)
(72) Erfinder: GRIESINGER, Manfred, 71229 Leonberg (DE); HARTLIEB, Markus, 72141 Walddorfhäslach (DE); KINCES, Wilhelm, 73732 Esslingen (DE); LEIS, Hans-Georg, 73733 Esslingen (DE); ROTHE, Siegfried, 73770 Denkendorf (DE)
(86) Internationale Anmeldenummer: PCT/EP2003/013917
(87) Internationale Veröffentlichungsnummer: WO 2004/054842

(56) Entgegenhaltungen:
- EP-A- 0 764 916
- EP-A- 1 113 216
- WO-A-00/15462
- WO-A-01/98708
- WO-A-98/54030
- WO-A-99/42856
- DE-A- 3 244 358
- DE-A- 10 062 103
- DE-U- 29 806 638
- US-A- 5 463 384

## Beschreibung

Die Erfindung betrifft eine multifunktionale Beleuchtungseinrichtung und ein Verfahren zum Betrieb einer solchen Einrichtung nach den Oberbegriffen der Patentansprüche 1 und 11.

Zur Verbesserung der Sicherheit im Straßenverkehr verfügen moderne Kraftfahrzeuge neben der herkömmlichen Beleuchtungseinrichtung über zusätzliche, den Fahrzeuglenker direkt oder indirekt unterstützende Sensorsysteme, um das Umfeld der Fahrzeugs, insbesondere hinsichtlich der frühzeitigen Erkennung von Gefahrensituationen zu beobachten. Hierzu zählen insbesondere Radarsysteme zur Erfassung der Entfernung und Relativgeschwindigkeit von Objekten oder auch Nachtsichtverbesserungssysteme, welche auf der Ausleuchtung des Straßenumfeldes mit infrarotem Licht basieren. Diese Systeme sind im allgemeinen als eigenständige Systeme ausgeführt und sind räumlich getrennt als zusätzliche Komponente neben Beleuchtungs- und Signalanlagen am Fahrzeug integriert.

Eine kompakte Bauform von Umfeldsensorik und Fahrzeugscheinwerfer wird der Schrift DE 196 252 A1 beschrieben. Hierin wird eine Fahrzeugscheinwerfer beschrieben, welcher ein mit einer Sensoreinrichtung gemeinsames Gehäuse aufweist. Der Scheinwerfer ist in dem Gehäuse hinter einer die Lichtaustrittsöffnung abdeckenden Lichtscheibe angeordnet. Ebenfalls hinter derselben Lichtscheibe angeordnet findet sich auch die Sensoreinrichtung, wobei die Lichtscheibe in diesem Bereich speziell an die optischen Erfordernisse des Sensors angepasst ist.

In ähnlicher Weise zeigt die Schrift DE 197 31 754 A1 eine Kombination aus einem konventionellen Fahrzeugscheinwerfer mit einem Abstandssensor. Hierbei werden die Sensorsignale über einen im Scheinwerfer befindlichen Spiegel gelenkt, dass die optischen und mechanischen Komponenten für Strahldurchtritt, Strahlformung und Strahlablenkung von Scheinwerfer und Sensorik gemeinsam genutzt werden können.

Bei diesen kombinierten Anordnungen von Scheinwerfern und Sensoreinrichtüngen ist es notwendig die beiden Lichtquelle und Sensor deutlich räumlich getrennt anzuordnen um eine gegenseitige Beeinflussung zu vermeiden. Soll dennoch eine räumlich kompakte Bauweise realisiert werden, so ist dies nur mittels anfälliger Spiegelanordnungen möglich, welche auch bei unbedeutenden Bagatelleunfällen im Straßenverkehr schon stark beschädigt werden können.

Eine räumlich kompakte Integration eines Photodetektors einer optischen Entfernungsmessungseinrichtung in einem Scheinwerfer wird in der JP 06-325296 A aufgezeigt. Der Lichtquelle des Scheinwerfers und der Photodetektor sind hierbei hinter einer gemeinsamen Linse versetzt zueinander angeordnet, so dass die Strahlengänge der beiden Sensoren voneinander getrennt sind und sich somit nicht gegenseitig beeinflussen. Die kompakte, robuste Bauweise resultiert hierbei jedoch in einer eingeschränkten Variabilität bei der Auslegung der möglichen Strahlengänge.

Aus der WO98/54030 A ist eine gattungsmäßige multifunktionale Beleuchtungseinrichtung zur Verwendung in einem Kraftfahrzeug bekannt, bei welchem die Beleuchtungseinrichtung durch eine Anordnung einer Vielzahl von zu einem Feld gruppierten Halbleiterlichtquellen gebildet wird. Hierbei sind an einzelnen Positionen dieses Feldes an Stelle der Halbleiterlichtquellen Sensorelemente angeordnet. Wenigstens einer Halbleiterlichtquelle und wenigstens einem Sensor kann dabei eine gemeinsame Optik zugeordnet werden.

Ausgehend vom Stand der Technik ist es die Aufgabe der Erfindung, eine multifunktionale Beleuchtungseinrichtung zu schaffen, welche in kompakter Bauweise realisiert werden kann und bei welcher die Strahlungsgang von Beleuchtung und Sensoreinrichtung in einem sehr weiten Bereich frei bestimmt werden kann.

Die Aufgabe der zum einen durch eine Vorrichtung und einer zum Betrieb der Vorrichtung geeignete Verfahren mit den Merkmalen der Patentansprüche 1 und Anspruchs 11 gelöst. Vorteilhafte Ausgestaltungen und Weiterbildungen der Erfindung sind in den abhängigen Ansprüchen beschrieben.

Die Lösung im Rahmen der ersten Ausgestaltungsform der Erfindung sieht vor, dass die Leuchtmittel der Beleuchtungseinrichtung durch eine Anordnung einer Vielzahl zu einem Feld gruppierten Halbleiterlichtquellen gebildet werden und dass an einzelnen Positionen dieses Feldes an Stelle der Halbleiterlichtquellen Sensorelemente angeordnet sind. So lässt sich auf vorteilhafte Weise ein multifunktionaler Scheinwerfer schaffen, welcher sich in robuster Bauweise als eine kompakte Einheit auf kleinstem Raum realisieren lässt. Da die Lichtquellen und die Sensorelemente nicht mehr notwendiger Weise die selbe Optik nutzen, sondern jedes einzelne Element des multifunktionalen Scheinwerfers eine individuell gestaltete Optik aufweisen kann, läst sich der Strahlengang der Beleuchtungseinrichtung von dem Blickfeld der Sensorik trennen und in weiten Bereichen unabhängig voneinander festlegen.

Die Wahl geeigneter Halbleiterlichtquellen ist hierbei nicht auf solche, welche Licht im sichtbaren Wellenlängenbereich ausstrahlen beschränkt. Es ist vielmehr denkbar unterschiedlichste Halbleiterlichtquellen, welche Licht in unterschiedlichen Wellenlängenbreichen ausstrahlen einzusetzen. So ist insbesondere eine vorteilhafte Kombination von sichtbaren und infrarotes Licht ausstrahlenden Halbleiterlichtquellen denkbar.

Insbesondere bei den Halbleiterlichtquellen, welche Licht im nichtsichtbaren Bereich ausstrahlen, ist es denkbar, diese für unterschiedliche Zwecke zu nutzen. Einer der Hauptaufgaben könnte deren die Nutzung als Beleuchtungsquelle im Rahmen eines Systems zur Sichtverbesserung sein, eine andere sinnvolle Anwendung liegt in der Nutzung als Sendequellen in einer Sende-/Empfängeranordnung. Es ist hier gleichwohl denkbar ein und die selbe Lichtquelle bzw. Gruppe von Lichtquellen sowohl als Beleuchtungsquelle und als Sendequelle zu verwenden, oder aber jeweils spezifischen Lichtquellen oder Gruppen von Lichtquelle fest die eine oder andere Aufgabe (Beleuchtung- oder Sendeaufgabe) zuzuordnen.

Bei der Verwendung innerhalb einer Sender-/Empfängeranordnung fungieren in vorteilhafter Weise die im multifunktionalen Scheinwerfer integrierten Sensorelemente als Empfänger. Andererseits können sich aber auch die Empfänger an anderen Objekten im Umfeld der multifunktionalen Beleuchtungseinrichtung befinden; so beispielsweise an anderen Fahrzeugen zur Ermöglichung einer Fahrzeug-Fahrzeug-Kommunikation, oder an ortsfesten Empfangspunkten, beispielsweise zur Erfassung von Informationen im Zusammenhang mit automatischen Straßenmautsystemen. Das bedeutet, dass in Bezug auf die Sende-/Empfangsfunktionalität einer multifunktionalen Beleuchtungseinrichtung diese für sich selbst eine abgeschossene Einheit bilden kann, wobei dann im allgemeinen die einander zugeordnete Lichtquelle und das Sensorelemente miteinander synchronisiert zu betreiben sind. Gleichwohl kann auch ein Paar oder eine Vielzahl von Beleuchtungseinrichtungen zusammengenommen eine flexible Einheit bilden, bei welcher sich die Anzahl von zugehörigen Sende- und Empfangskomponenten sich im zeitlichen Zusammenhang ständig ändert. In einer solch flexiblen Konfiguration arbeiten die einzelnen örtlich getrennten Kommunikationselemente in der Regel in einem asynchronen Betriebsmodus miteinander.

Um eine möglichst kompakte Bauform der erfindungsgemäßen multifunktionalen Beleuchtungseinrichtung zu realisieren, werden die Einzeloptiken, welche den Halbleiterlichtquellen oder den Einzelsensoren zugeordnet werden, möglichst flach ausgeführt und weisen auf der Seite, auf welcher sie mit den Halbleiterlichtquellen oder Sensoren in Verbindung stehen, einen möglichst kleine Querschnittsfläche auf. So lässt sich eine hohe Packungsdichte von Licht- und Sensorelementen erzielen, welche gleichzeitig eine Strahlungsdichte und eine hohe sensorische Empfindlichkeit ermöglicht. Insbesondere lässt sich die Strahlungsdichte und die Empfindlichkeit für spezifische Anwendungen dadurch erhöhen, wenn diese Anwendungen nicht mit Einzelelementen realisiert werden, sondern wenn hierfür mehrere Elemente (Halbleiterlichtquellen oder Sensoren) zu Gruppen zusammengeschaltet werden. Diese Gruppenbildung kann sowohl permanent, beispielsweise durch feste Verdrahtung erfolgen, aber auch im Rahmen einer gezielten Ansteuerung und Auswahl flexibel gestaltet werden.

In besonders vorteilhafte Weise lässt sich eine kompakte Ausbildung der multifunktionalen Beleuchtungseinrichtung dadurch realisieren, dass den einzelnen Halbleiterlichtquellen Optiken in Form eines zweidimensionalen Cartovals vorgeschaltet werden, wie sie auch in der nachveröffentlichten Patentanmeldung DE 102 49 819.9 beschrieben werden. Die Optiken werden dabei möglichst flach ausgeführt wird, so dass die Lichteintrittsöffnung der Optik eine längliche, im wesentlichen rechteckige Form aufweist. Dabei ist es von Vorteil, wenn die Optik senkrecht zur Lichteintrittsfläche einen Zentralbereich aufweist, dessen Projektion in eine zweidimensionale Ebene einem zylindrischen 2-dimensionalen Cartovals entspricht. Ein Cartoval ist eine geometrische Fläche, die als Grenzfläche eines brechenden Mediums das von einem Brennpunkt ausgehende Licht auch für große Öffnungswinkel in einem zweiten Brennpunkt sammelt. Um das von der Halbleiterlichtquelle ausgehende Licht noch besser zu nutzen, kann die in Form eines Cartovals geformte Lichtaustrittsfläche der Optik, mit einem parabolischen Reflektor kombiniert werden.

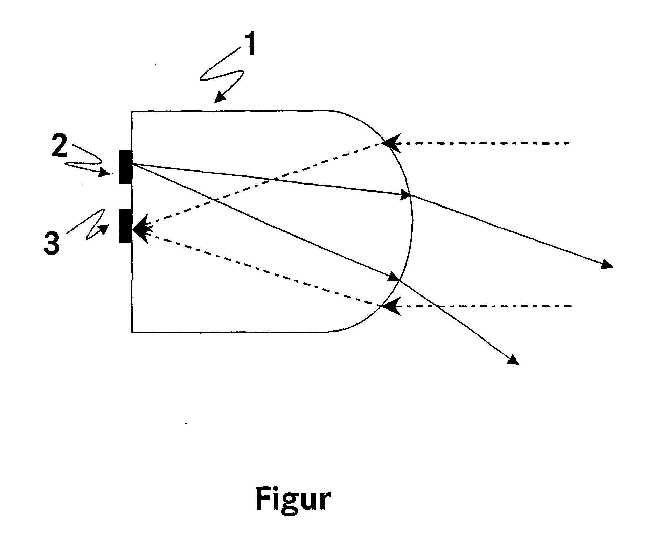

Besonders gewinnbringend lässt sich die multifunktionale Beleuchtungseinrichtung dadurch kompakt und leistungsorientiert gestallten, dass wenigstens einzelnen Optiken mehrere Halbleiterlichtquellen oder Sensorelemente zugeordnet werden. In einem solchen Fall, wirkt die eine Optik auf die einzelnen Lichtquellen und Sensoren unterschiedlich, so dass diese unterschiedliche Abstrahlungscharakteristiken und Empfangscharakteristiken aufweisen. In der praktischen kann dies oft äußerst vorteilhaft ausgenutzt werden, indem beispielsweise eine Halbleiterlichtquelle so an einer Optik positioniert wird, dass sie in der Funktionalität eines Abblendlichtes den Bereich eng vor einem Fahrzeug ausleuchtet, während der Sensor so an der Optik positioniert wird, dass Signale aus Bereichen in weiter Entfernung vor dem Fahrzeug erfassen kann. Eine solche Anordnung wird beispielhaft in einer schematischen Darstellung der Figur zu dieser Anmeldung aufgezeigt. Die Figur zeigt den Querschnitt einer im allgemeinen flach ausgeführten Optik (1), an deren Lichteintrittsfläche zum einen eine Halbleiterlichtquelle (2) und zum anderen ein Sensorelement (3) angeordnet sind. Bei dem Sensorelement kann es sich beispielsweise um eine Photodiode oder eine auf einem Substrat realisierte Millimeterwellenantenne (MMIC oder SIMWIC-Komponente) handeln. Durch die optischen Eigenschaften der Optik sind der Strahlengang der Lichtquelle (2) und der Empfangsbereich des Sensorelementes (3) voneinander getrennt und auf unterschiedliche Bereiche im Umfeld der multifunktionalen Beleuchtungseinrichtung gerichtet; hier in den Abblendlichtbereich direkt vor dem Fahrzeug und in entfernte Bereiche beispielsweise zur Sichtweitenbestimmung.

In Verbindung mit der erfinderischen multifunktionalen Beleuchtungseinrichtung lassen sich neuartig Systeme zur Abstandsmessung und/oder Sichtweitenbestimmung realisieren, bei welchen sich insbesondere das Frontend (Lichtquelle und Sensor) besonders kompakt realisieren lässt. Auch kann sich durch die Integration von Photodioden in die multifunktionale Beleuchtungseinrichtung das Umgebungslicht gerade durch denjenigen Beleuchter gemessen werden, welcher die zum Ausgleich von schwachem Umgebungslicht notwendige Lichtleistung erbringen soll.

Insbesondere Systeme zur Nachtsichtverbesserung, welche auf Basis aktiver infraroter oder ultravioletter Umgebungsbeleuchtung arbeiten, lassen sich platzsparend und in robuster Bauweise in einer kompakten Einheit realisieren.

Auch eignet sich die multifunktionale Beleuchtungseinrichtung, insbesondere unter Integration von Millimeterwellen-Antennen zur Detektion von Objekten im Umfeld der Einrichtung nach dem Radarprinzip.

## Patentansprüche

1. Multifunktionale Beleuchtungseinrichtung, insbesondere zur Verwendung in einem Kraftfahrzeug,
dass das Leuchtmittel der Beleuchtungseinrichtung durch eine Anordnung einer Vielzahl zu einem Feld gruppierten Halbleiterlichtquellen (2) gebildet wird,
dass an einzelnen Positionen dieses Feldes an Stelle der Halbleiterlichtquellen (2), Sensorelemente (3) angeordnet sind,
und dass aus der Vielzahl von Halbleiterlichtquellen (2) und Sensorelementen (3), wenigstens eine Halbleiterlichtquelle (2) und wenigstens ein Sensor (3) ausgewählt und einer gemeinsamen Optik (1) zugeordnet werden,
**dadurch gekennzeichnet,**
**dass** die Zuordnung in Bezug auf die Optik (1) dergestalt erfolgt, dass die Optik (1) auf die Halbleiterlichtquelle (2) und den Sensor (3) so wirkt, dass diese eine unterschiedliche Abstrahl- bzw. Empfangscharakteristik aufweisen,
wobei die einzelnen Optiken (1) senkrecht zur Lichteintrittsfläche einen Zentralbereich aufweisen, dessen Projektion in eine zweidimensionale Ebene einem zylindrischen 2-dimensionalen Kartovals entspricht.

2. Multifunktionale Beleuchtungseinrichtung nach Anspruch 1,
**dadurch gekennzeichnet,**
**dass** die Halbleiterlichtquellen (2) Licht in unterschiedlichen Wellenlängenbereichen, insbesondere sowohl im sichtbaren Wellenlängenbereich als auch im infraroten Wellenlängenbereich ausstrahlen.

3. Multifunktionale Beleuchtungseinrichtung nach einem der vorhergehenden Ansprüche,
**dadurch gekennzeichnet,**
**dass** die den einzelnen Halbleiterlichtquellen (2) zugeordneten Optiken (1) als flache Elemente ausgeführt sind, deren Lichteintrittsöffnung eine längliche, im Wesentlichen rechteckige Form aufweisen.

4. Multifunktionale Beleuchtungseinrichtung nach einem der vorhergehenden Ansprüche,
**dadurch gekennzeichnet,**
**dass** der Zentralbereich der Optiken (1) mit einem parabolischen Reflektor kombiniert wird.

5. Multifunktionale Beleuchtungseinrichtung nach einem der vorhergehenden Ansprüche,
**dadurch gekennzeichnet,**
**dass** die Beleuchtungseinrichtung ein Mittel umfasst, durch welches die einzelnen Halbleiterlichtquellen (2) und die Sensorelemente (3) individuell oder in Gruppen geschaltet werden können.

6. Multifunktionale Beleuchtungseinrichtung nach einem der vorhergehenden Ansprüche,
**dadurch gekennzeichnet,**
**dass** bestimmte Sensorelemente (3) bestimmten Halbleiterlichtquellen (2) zugeordnet sind,
und **dass** ein Mittel vorgesehen ist, um diese Sensorelemente (3) mit den ihnen zugeordneten Halbleiterlichtquellen (2) synchronisiert zu betreiben.

7. Multifunktionale Beleuchtungseinrichtung nach einem der vorhergehenden Ansprüche,
**dadurch gekennzeichnet,**
**dass** es sich bei den Sensorelementen (3) um Photodioden handelt.

8. Multifunktionale Beleuchtungseinrichtung nach einem der vorhergehenden Ansprüche,
**dadurch gekennzeichnet,**
**dass** es sich bei den Sensorelementen (3) um Antennen handelt.

9. Multifunktionale Beleuchtungseinrichtung nach Anspruch 8,
**dadurch gekennzeichnet,**
**dass** die Antennen (3) mit einer Sende-/Empfangseinheit in Verbindung stehen.

10. Verfahren zum Betrieb einer multifunktionalen Beleuchtungseinrichtung nach einem der Ansprüche 1 bis 9,
**dadurch gekennzeichnet,**
**dass** die Sensorelemente (3) und Halbleiterlichtquellen (2) unabhängig individuell oder in Gruppen angesteuert werden.

11. Verfahren nach Anspruch 10,
**dadurch gekennzeichnet,**
**dass** einzelne Sensorelemente (3) synchron mit ihnen zugeordneten Halbleiterlichtquellen (3) betrieben werden.

12. Verwendung einer multifunktionalen Beleuchtungseinrichtung nach einem der vorhergehenden Ansprüche 1-9, zur Abstandsmessung und/oder Sichtweitenbestimmung.

13. Verwendung einer multifunktionalen Beleuchtungseinrichtung nach einem der vorhergehenden Ansprüche 1-9, zur Messung des Umgebungslichtes.

14. Verwendung einer multifunktionalen Beleuchtungseinrichtung nach einem der vorhergehenden Ansprüche 1-9, in einem System zur Nachtsichtverbesserung, welches auf Basis aktiver infraroter oder ultravioletter Umgebungsbeleuchtung arbeitet.

15. Verwendung einer multifunktionalen Beleuchtungseinrichtung nach einem der vorhergehenden Ansprüche 1-9, als Fahrzeug-Fahrzeug-Kommunikationssystem in einem Kraftfahrzeug.

16. Verwendung einer multifunktionalen Beleuchtungseinrichtung nach einem der vorhergehenden Ansprüche 1-9, zur Detektion von Objekten im Umfeld der Einrichtung nach dem Radarprinzip.

## Claims

1. Multifunctional illumination device, in particular for use in a motor vehicle,
with the luminous means of the illumination device being formed by an arrangement of a multiplicity of semiconductor light sources (2) grouped to form an array,
with sensor elements (3) being arranged instead of the semiconductor light sources (2) at individual positions of this array, and
with at least one semiconductor light source (2) and at least one sensor (3) being selected from the multiplicity of semiconductor light sources (2) and sensor elements (3) and being assigned to a common optical system (1), **characterized**
**in that** the assignment with reference to the optical system (1) is performed in such a way that the optical system (1) acts on the semiconductor light source (2) and sensor (3) such that these have different emission and/or reception characteristics,
perpendicular to the light entry surface the individual optical systems (1) having a central region whose projection into a two-dimensional plane corresponds to a cylindrical 2-dimensional Cartesian oval.

2. Multifunctional illumination device according to Claim 1,
**characterized in that**
the semiconductor light sources (2) emit light in different wavelength regions, in particular both in the visible wavelength region and in the infrared wavelength region.

3. Multifunctional illumination device according to one of the preceding claims,
**characterized in that**
the optical systems (1) assigned to the individual semiconductor light sources (2) are designed as flat elements whose light entry openings have an elongated, substantially rectangular shape.

4. Multifunctional illumination device according to one of the preceding claims,
**characterized in that**
the central region of the optical systems (1) is combined with a parabolic reflector.

5. Multifunctional illumination device according to one of the preceding claims,
**characterized in that**
the illumination device comprises a means enabling the individual semiconductor light sources (2) and the sensor elements (3) to be switched individually or in groups.

6. Multifunctional illumination device according to one of the preceding claims,
**characterized in that**
the specific sensor elements (3) are assigned to specific semiconductor light sources (2),
and **in that** a means is provided for operating the sensor elements (3) in a fashion synchronized with the semiconductor light sources (2) assigned to them.

7. Multifunctional illumination device according to one of the preceding claims,
**characterized in that**
the sensor elements (3) are photodiodes.

8. Multifunctional illumination device according to one of the preceding claims,
**characterized in that**
the sensor elements (3) are antennas.

9. Multifunctional illumination device according to Claim 8,
**characterized in that**
the antennas (3) are connected to a transceiver unit.

10. Method for operating a multifunctional illumination device according to one of Claims 1 to 9,
**characterized in that**
the sensor elements (3) and semiconductor light sources (2) are driven independently individually or in groups.

11. Method according to Claim 10,
**characterized in that**
individual sensor elements (3) are operated synchronously with semiconductor light sources (2) assigned to them.

12. Use of a multifunctional illumination device according to one of the preceding claims for the purpose of measuring distances and/or determining visibility.

13. Use of a multifunctional illumination device according to one of the preceding claims for the purpose of measuring the ambient light.

14. Use of a multifunctional illumination device according to one of the preceding claims in a system for improving night vision that operates on the basis of active infrared or ultraviolet ambient illumination.

15. Use of a multifunctional illumination device according to one of the preceding claims as vehicle-to-vehicle communication system in a motor vehicle.

16. Use of a multifunctional illumination device according to one of the preceding claims for the purpose of detecting objects in the surroundings of the device using the radar principle.

## Revendications

1. Dispositif d'éclairage multifonctionnel, notamment destiné à être utilisé dans un véhicule automobile,
le moyen d'éclairage du dispositif d'éclairage étant formé par un arrangement d'une pluralité de sources de lumière en semiconducteur (2) groupées en un panneau,
des éléments de détection (3) étant disposés en des positions individuelles de ce panneau, à l'endroit des sources de lumière en semiconducteur (2),
et parmi la pluralité de sources de lumière en semiconducteur (2) et d'éléments de détection (3), au moins une source de lumière en semiconducteur (2) et au moins un détecteur (3) étant choisis et associés dans une optique (1) commune,
**caractérisé en ce**
**que** l'association en rapport avec l'optique (1) est effectuée de telle sorte que l'optique (1) agit sur la source de lumière en semiconducteur (2) et le détecteur (3) de manière à ce que ceux-ci présentent une caractéristique de rayonnement et de réception différente,
les optiques (1) individuelles présentant perpendiculairement à la surface d'entrée de la lumière une zone centrale dont la projection dans un plan bidimensionnel correspond à une lentille Kartoval cylindrique à 2 dimensions.

2. Dispositif d'éclairage multifonctionnel selon la revendication 1, **caractérisé en ce que** les sources de lumière en semiconducteur (2) émettent de la lumière dans différentes plages de longueurs d'onde, notamment à la fois dans la plage des longueurs d'onde visibles et dans la plage des longueurs d'onde de l'infrarouge.

3. Dispositif d'éclairage multifonctionnel selon l'une des revendications précédentes, **caractérisé en ce que** les optiques (1) associées aux sources de lumière en semiconducteur (2) individuelles sont réalisées sous la forme d'éléments plats dont l'orifice d'entrée de la lumière présente une forme allongée essentiellement rectangulaire.

4. Dispositif d'éclairage multifonctionnel selon l'une des revendications précédentes, **caractérisé en ce que** la zone centrale des optiques (1) est combinée avec un réflecteur parabolique.

5. Dispositif d'éclairage multifonctionnel selon l'une des revendications précédentes, **caractérisé en ce que** le dispositif d'éclairage comprend un moyen par le biais duquel les sources de lumière en semiconducteur (2) individuelles et les éléments de détection (3) peuvent être commutés individuellement ou en groupes.

6. Dispositif d'éclairage multifonctionnel selon l'une des revendications précédentes, **caractérisé en ce que** des sources de lumière en semiconducteur (2) données sont associées à des éléments de détection (3) donnés et qu'il est prévu un moyen pour faire fonctionner ces éléments de détection (3) de manière synchronisée avec les sources de lumière en semiconducteur (2) qui leur sont associées.

7. Dispositif d'éclairage multifonctionnel selon l'une des revendications précédentes, **caractérisé en ce que** les éléments de détection (3) sont des photodiodes.

8. Dispositif d'éclairage multifonctionnel selon l'une des revendications précédentes, **caractérisé en ce que** les éléments de détection (3) sont des antennes.

9. Dispositif d'éclairage multifonctionnel selon la revendication 8, **caractérisé en ce que** les antennes (3) sont reliées à une unité d'émission/réception.

10. Procédé pour mettre en oeuvre un dispositif d'éclairage multifonctionnel selon l'une des revendications 1 à 9, **caractérisé en ce que** les éléments de détection (3) et les sources de lumière en semiconducteur (2) sont commandés indépendamment individuellement ou en groupes.

11. Procédé selon la revendication 10, **caractérisé en ce que** des éléments de détection (3) individuels sont utilisés de manière synchronisée avec les sources de lumière en semiconducteur (2) qui leurs sont associées.

12. Utilisation d'un dispositif d'éclairage multifonctionnel selon l'une des revendications précédentes pour mesurer une distance et/ou pour déterminer une distance de visibilité.

13. Utilisation d'un dispositif d'éclairage multifonctionnel selon l'une des revendications précédentes pour mesurer la luminosité ambiante.

14. Utilisation d'un dispositif d'éclairage multifonctionnel selon l'une des revendications précédentes dans un système d'amélioration de la visibilité nocturne qui fonctionne sur la base d'un éclairage ambiant infrarouge ou ultraviolet actif.

15. Utilisation d'un dispositif d'éclairage multifonctionnel selon l'une des revendications précédentes comme système de communication de véhicule à véhicule dans un véhicule automobile.

16. Utilisation d'un dispositif d'éclairage multifonctionnel selon l'une des revendications précédentes pour détecter des objets dans l'environnement du dispositif selon le principe du radar.
